# FASCICULE DE BREVET EUROPEEN

(11) **EP 0 373 996 B1**
(45) Date de publication et mention de la délivrance du brevet: **21.07.1993**
(21) Numéro de dépôt: 89403303.4
(22) Date de dépôt: 29.11.1989
(51) Int. Cl.: F16F 9/46, F16F 9/52

(54) **Amortisseur hydraulique pour suspension de vehicule automobile**
Hydraulischer Dämpfer für Aufhängung eines Kraftfahrzeuges
Hydraulic damper for a motor vehicle suspension

(30) Priorité: 14.12.1988 FR 8816461
(43) Date de publication de la demande: 20.06.1990
(73) Titulaire: AUTOMOBILES PEUGEOT, 75116 Paris (FR); AUTOMOBILES CITROEN, 92200 Neuilly-sur-Seine (FR)
(72) Inventeur: Graer, Georges, F-78140 Velizy Villacoublay (FR)
(74) Mandataire: Fabien, Henri

(56) Documents cités:
- EP-A- 0 236 204
- DE-A- 2 932 245
- DE-A- 3 704 712
- PATENT ABSTRACTS OF JAPAN vol. 10, no. 231 (M-506)(2287) 12 août 1986, & JP-A-61 65931 (HINO MOTORS LTD.) 4 avril 1986,

## Description

L'invention concerne un amortisseur hydraulique pour suspension de véhicule automobile, destiné à relier en parallèle avec des moyens élastiques, la partie suspendue, et la partie non suspendue du véhicule; afin d'amortir les débattements.

En général, un amortisseur hydraulique comprend, monté coulissant dans un cylindre un piston muni de clapets, freinant la circulation d'un liquide, de part et d'autre du piston, dans un sens et dans l'autre. Le piston est en général équipé de clapets d'attaque agissant quand le piston s'enfonce dans le cylindre et de clapets de détente agissant quand le piston s'extrait du cylindre.

La demande de brevet FR-A-8811954 décrit un amortisseur hydraulique du genre défini ci-dessus selon le préambule de la revendication 1, comportant des moyens pour étrangler l'écoulement à travers l'un au moins des clapets et de modifier ainsi l'amortissement en fonction de paramètres liés à l'état du véhicule.

L'invention a pour objet un amortisseur de ce type, muni de moyens simplifiés pour moduler l'amortissement. Elle a également pour objet un amortisseur muni de moyens permettant d'agir en fonctionnement sur un ou plusieurs clapets ou encore préférentiellement sur une ou plusieurs paires de clapets, chaque paire comportant un clapet d'attaque et un clapet de détente.

Les clapets se composent de soupapes mises en appui sur leur siège par un ressort hélicoïdal.

L'amortisseur selon l'invention se caractérise par le fait que l'un au moins des clapets est inclus dans une coupelle en alliage à mémoire de forme, propre à étrangler l'écoulement par contraction sous effet thermique, en écrasant le ressort de clapet au point de rendre ses spires jointives.

On sait qu'un alliage à mémoire de forme, qui pourrait être un alliage de nickel et de titane, se déforme plastiquement en dessous d'une température critique, à l'état martensitique et reprend sa forme initiale, dès que sa température est supérieure à sa température de transformation à l'état austénitique.

Avantageusement, les coupelles correspondant à chaque paire de clapets diamétralement opposés, l'un d'attaque, l'autre de détente, sont reliés à un circuit électrique, propre à élever simultanément leur température par effet joule; les différents circuits étant agencés de manière à pouvoir agir indépendamment sur une ou plusieurs paires de clapets.

D'autres caractéristiques et avantages de l'invention apparaîtront mieux dans la description détaillée qui suit et se réfère aux dessins annexés donnés uniquement à titre d'exemple, et dans lesquels:
- la Figure 1 représente une vue en coupe du piston de l'amortisseur;
- la Figure 2 représente une vue en perspective de la coupelle en alliage à mémoire de forme.

Tel qu'il est représenté au dessin, coulissant dans un cylindre 1, le piston 2 de l'amortisseur selon l'invention, comporte, solidarisées à une tige de piston 2a deux parties cylindriques 3 et 3a séparées par une plaque 4.

Les parties cylindriques 3 et 3a ainsi que la plaque 4 sont traversées par des conduits longitudinaux 5 disposés périphériquement pour la circulation d'un liquide de part et d'autre du piston.

La partie cylindrique 3, située du côté du piston opposée à la tige comporte intérieurement au conduit 5 des clapets 6 de détente, freinant la circulation du liquide pendant l'extraction du piston; la partie cylindrique 3a située du côté de la tige comporte les clapets 7 d'attaque agissant pendant l'enfoncement du piston. Chaque clapet 6 ou 7 se compose d'une soupape 8 mise en appui par un ressort 9 sur un siège 10 usiné sur la plaque 4.

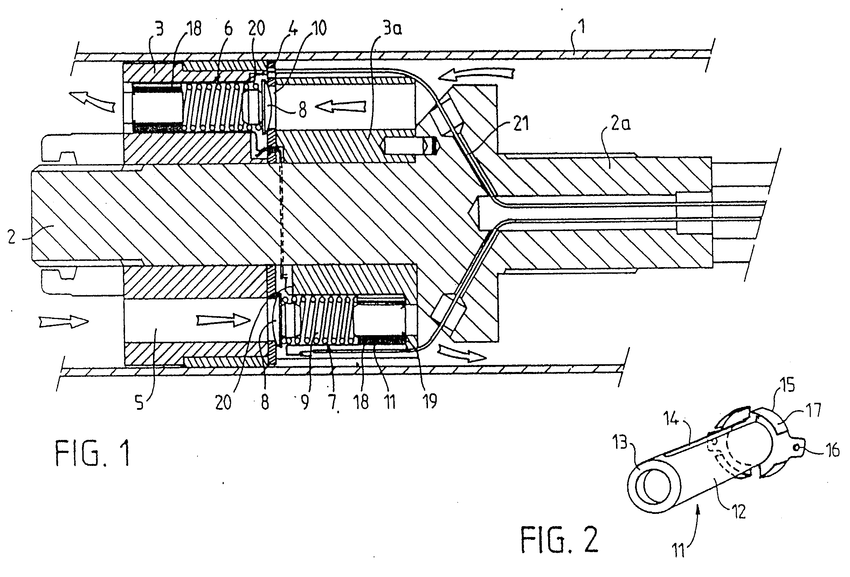

Chaque clapet d'attaque ou de détente est inclus à l'intérieur d'une coupelle 11 en alliage à mémoire de forme, visible sur la figure 2. La coupelle se compose d'un tube mince 12 comportant à l'une de ses extrémités un bord tombé intérieur 13, et deux fentes longitudinales 14 diamétralement opposées, séparant l'autre extrémité en deux moitiés qui sont solidarisées préférentiellement par soudure, à deux demi-collerettes 15, en alliage ordinaire, comportant des oreilles 16 servant de contacts électriques. Chaque demi-collerette 15 comporte des bords tombés extérieurs 17 donnant de la rigidité.

A l'intérieur de la coupelle, en appui sur son bord tombé intérieur 13, une entretoise 18 de longueur convenable sert à définir la contrainte initiale du ressort 9 de clapet en appui sur l'entretoise.

Les deux parties cylindriques 3 et 3a du piston 2 sont munies, à l'intérieur du conduit 5, d'un premier épaulement 19 sur lequel est en appui, à l'état dilaté, le bord tombé 13 de la coupelle et d'un deuxième épaulement 20 de diamètre plus grand sur lequel sont en appui, les bords tombés 17 des demi-collerettes 15.

Un circuit électrique 21 relie en série avec une source de tension, les oreilles 16 correspondant à deux coupelles diamétralement opposées, une coupelle d'attaque et une coupelle de détente. Les différentes paires de coupelles sont ainsi reliées à des circuits indépendants qui peuvent être connectés de manière à agir sur une ou plusieurs paires de coupelles. Quand le courant électrique est établi dans une coupelle, il se dirige d'une oreille 16 à l'autre en passant par les deux côtés de la paroi 12 séparées par les fentes 14, l'alliage à mémoire de forme servant lui-même de résistance électrique.

A l'état austénitique à température supérieure à la température de transformation, les coupelles ont une forme contractée, écrasant les ressorts des clapets qui deviennent ainsi inactifs. A la température ordinaire, à l'état martensitique, les coupelles deviennent plastiques, les ressorts 9 les étirent et mettent leur bord tombé 13 en butée sur les épaulements 19. Lorsque le courant électrique circule dans les coupelles, dont la paroi mince est séparée en deux moitiés par les fentes 14, les coupelles s'échauffent par effet joule, se contractent et se régidifient.

Il est possible de séparer les circuits électriques qui correspondent aux clapets d'attaque et de détente si on souhaite davantage d'amortissement dans un sens que dans l'autre.

## Revendications

1. Amortisseur hydraulique pour suspension de véhicule automobile comprenant, coulissant dans un cylindre (1), un piston (2) muni d'une pluralité de clapets (6,7) d'attaque et de détente, freinant la circulation d'un liquide de part et d'autre du piston dans un sens et dans l'autre, ces clapets étant composés de soupapes (8) mises en appui sur leur siège (10) par un ressort hélicoïdal (9) caractérisé en ce que l'un au moins des clapets (6,7) est inclus dans une coupelle (11) en alliage à mémoire de forme, propre à étrangler l'écoulement par contraction sous effet thermique, en écrasant le ressort (9) de clapet au point de rendre ses spires jointives.

2. Amortisseur selon la revendication 1, caractérisé en ce que les coupelles correspondant à chaque paire de clapets diamétralement opposées, l'un d'attaque l'autre de détente, sont reliées à un circuit électrique (21) propre à élever simultanément leur température par effet joule, les différents circuits étant agencés de manière à agir sur une ou plusieurs paires de clapets (6,7).

3. Amortisseur selon la revendication 2, caractérisé en ce que chaque coupelle (11) se compose d'un tube (12) mince comportant, à l'une de ses extrémités un bord tombé intérieur (13), et deux fentes longitudinales (14) diamétralement opposées séparant l'autre extrémité en deux moitiés solidarisées à deux demi-collerettes (15) en alliage ordinaire reliées à un circuit électrique (21).

4. Amortisseur selon la revendication 3, caractérisé en ce que le piston comporte un premier épaulement intérieur (19) sur lequel le bord tombé (13) de la coupelle (11) en état dilaté est en butée.

5. Amortisseur selon la revendication 4, caractérisée en ce que les demi-collerettes comportent des bords tombés extérieurs (17) en appui sur un deuxième épaulement (20) intérieur du piston (2).

6. Amortisseur selon la revendication 5, caractérisé en ce que la coupelle (11) comporte en appui sur son bord tombé intérieur (13) une entretoise (18) dont la longueur est appropriée à déterminer la contrainte initiale du ressort (9) de clapet.

## Patentansprüche

1. Hydraulische Dämpfungseinrichtung für die Radaufhängung von Kraftfahrzeugen, mit einem in einem Zylinder (1) verschiebbaren Kolben (2), der mit mehreren Belastungs- und Entlastungsventilen (6, 7) versehen ist, die die Zirkulation einer Flüssigkeit beiderseits des Kolbens in einem Richtungssinn und im anderen verlangsamen, wobei diese Ventile aus Ventilelementen (8) aufgebaut sind, die mittels einer Schraubenfeder (9) gegen ihren Sitz (10) gedrückt werden,
dadurch gekennzeichnet, daß wenigstens eines der Ventile (6, 7) in einer Federbüchse (11) aus einer Legierung mit Formerinnerungsvermögen enthalten ist, die dazu geeignet ist, die Strömung durch Kontraktion aufgrund der thermischen Wirkung zu drosseln, wobei die Feder (9) des Ventils bis zu dem Punkt zusammengedrückt wird, in dem ihre Windungen nebeneinander liegen.

2. Dämpfungseinrichtung gemäß Anspruch 1, dadurch gekennzeichnet, daß die Federbüchsen, die jeweils einem Paar von einander diametral gegenüberliegenden Ventilen, einem Belastungsventil und einem Entlastungsventil, entsprechen, mit einer elektrischen Schaltung (21) verbunden sind, die dazu geeignet ist, gleichzeitig deren Temperatur durch den Joule-Effekt zu erhöhen, wobei die verschiedenen Schaltungen so angeordnet sind, daß sie auf ein oder auf mehrere Paare von Ventilen (6, 7) einwirken können.

3. Dämpfungseinrichtung gemäß Anspruch 2, dadurch gekennzeichnet, daß jede Federbüchse (11) aus einem dünnen Rohr (12) aufgebaut ist, das an einem seiner Enden einen nach innen umgebogenen Rand (13) und zwei einander diametral gegenüberliegende Längsschlitze (14) aufweist, die das andere Ende in zwei Hälften unterteilen, die mit zwei mit einer elektrischen Schaltung (21) verbundenen Halbflanschen (15) aus einer normalen Legierung jeweils einteilig ausgebildet sind.

4. Dämpfungseinrichtung gemäß Anspruch 3, dadurch gekennzeichnet, daß der Kolben eine erste Innenschulter (19) aufweist, mit der der umgebogene Rand (13) der Federbüchse (11) im auseinandergezogenen Zustand in Anschlag ist.

5. Dämpfungseinrichtung gemäß Anspruch 4, dadurch gekennzeichnet, daß die Halbflansche nach außen umgebogene Ränder (17) aufweisen, die sich auf einer zweiten Innenschulter (20) des Kolbens abstützen.

6. Dämpfungseinrichtung gemäß Anspruch 5, dadurch gekennzeichnet, daß die Federbüchse (11) einen auf dem nach innen umgebogenen Rand (13) sich abstützenden Abstandshalter (18) aufweist, dessen Länge geeignet ist, die Anfangsbelastung der Feder (9) des Ventils zu festzulegen.

## Claims

1. A hydraulic shock absorber for the suspension of a motor vehicle comprising, sliding in a cylinder (1), a piston (2) provided with a plurality of driving and expansion clack-valves (6,7), braking the circulation of a liquid on either side of the piston in one direction and in the other, these clack-valves being composed of valves (8) placed to rest on their seat (10) by a helicoidal spring (9), characterised in that at least one of the clack-valves (6,7) is enclosed in a cap (11) of a shape-retaining alloy, adapted to throttle the flow by contraction under thermal effect, compressing the clack-valve spring (9) to the point of making its turns contiguous.

2. A shock absorber according to Claim 1, characterised in that the caps corresponding to each pair of diametrically opposed clack-valves, one for driving and the other for expansion, are connected to an electric circuit (21) adapted to simultaneously raise their temperature by Joule effect, the different circuits being arranged so as to act on one or more pairs of clack-valves (6,7).

3. A shock absorber according to Claim 2, characterised in that each cap (11) is composed of a thin tube (12) comprising at one of its ends an internal flanged edge (13), and two diametrically opposed longitudinal slots (14) separating the other end into two halves made integral with two half-flanges (15) of ordinary alloy connected to an electric circuit (21).

4. A shock absorber according to Claim 3, characterised in that the piston comprises a first internal shoulder (19) on which the flanged edge (13) of the cap (11) in dilated state is in abutment.

5. A shock absorber according to Claim 4, characterised in that the half-flanges comprise external flanged edges (17) resting on a second internal shoulder (20) of the piston (2).

6. A shock absorber according to Claim 5, characterised in that the cap (11) comprises a cross-piece (18), resting on its internal flanged edge (13), the length of which cross-piece (18) is suitable to determine the initial stress of the clack-valve spring (9).
